# FASCICULE DE BREVET EUROPEEN

(11) **EP 0 601 329 B1**
(45) Date de publication et mention de la délivrance du brevet: **07.01.1998**
(21) Numéro de dépôt: 93117636.6
(22) Date de dépôt: 30.10.1993
(51) Int. Cl.: A23L 3/22, A23P 1/06, A23L 1/10, B01F 5/02, A23C 3/037

(54) **Dispositif et procédé de traitement d'un produit fluide par injection de vapeur**
Einrichtung und Verfahren zur Behandlung eines Fluidums durch Dampfinjektion
Apparatus and process for treatment of a fluid product by steam injection

(30) Priorité: 09.12.1992 CH 3769/92
(43) Date de publication de la demande: 15.06.1994
(73) Titulaire: SOCIETE DES PRODUITS NESTLE S.A., 1800 Vevey (CH)
(72) Inventeur: Badertscher, Ernest, CH-1350 Orbe (CH); Poget, Paul-Henri, CH-1329 Bretonnieres (CH)
(74) Mandataire: Vuille, Roman

(56) Documents cités:
- BE-A- 369 967
- DE-C- 271 432
- DE-C- 898 586
- FR-A- 2 441 344
- SU-A- 1 065 030
- US-A- 2 127 026
- US-A- 2 976 024
- US-A- 3 450 022

## Description

La présente invention a trait à un dispositif de traitement d'un produit alimentaire par injection de vapeur, ainsi qu'à un procédé de traitement dudit produit alimentaire à l'aide du présent dispositif.

Il est connu, par exemple par le brevet suisse CH 626 788, un dispositif de stérilisation et/ou d'homogénéisation d'un produit fluide à l'aide d'injection de vapeur, comprenant un corps tubulaire en forme de T composé d'un tube droit et d'un bras tubulaire d'amenée du produit fluide, et une buse d'injection de vapeur disposée axialement dans une première extrémité du tube et débouchant sur une chambre de mélange à l'embranchement du bras et du tube, dispositif dans lequel la paroi intérieure de la buse converge vers l'aval sur un canal court de section constante débouchant sur la chambre de mélange, un écran de brassage étant disposé dans le tube à distance de la sortie du canal de la buse.
La particularité de ce dispositif est de permettre le laminage en couche mince du produit à stériliser, avant son contact, à contre-courant, avec le jet de vapeur.
Ce laminage est obtenu par le serrage d'un cône contre la buse de laquelle sort le jet de vapeur.
Un effet d'homogénéisation est alors obtenu, dû au cisaillement du produit qui entre, à contre courant, dans le jet de vapeur sonique.
Par vitesse sonique d'un gaz au travers d'une buse, on entend, dans ce document et dans la suite de la présente description, la vitesse atteinte quand la valeur de la pression en amont de la buse est au moins le double de la valeur de la pression en aval.
Ce dispositif, qui permet une très bonne régulation des températures, jusqu'à la limite des pressions disponibles du réseau de vapeur, présente toutefois un inconvénient.
En effet, lorsque l'on souhaite, par exemple, changer le débit de la vapeur introduite à l'intérieur du dispositif, il est nécessaire de remplacer ladite buse d'injection par une buse présentant un diamètre approprié au débit souhaité, et donc, pour ce faire, il est nécessaire d'interrompre la mise en oeuvre du procédé afin de modifier l'installation.

La présente invention a pour but de pallier cet inconvénient, et propose un dispositif de traitement, entre autre d'un produit alimentaire fluide, par injection de vapeur, qui permet de faire varier le débit de la vapeur introduite dans ledit dispositif, sans avoir à modifier l'installation en changeant de buse, et donc sans entraîner l'arrêt de la mise en oeuvre du procédé.

La présente invention a donc pour objet un dispositif de traitement d'un produit alimentaire par injection de vapeur, comprenant :
- un corps tubulaire en forme de T composé d'un tube droit et d'un bras tubulaire de sortie du produit traité,
- une buse d'injection de vapeur disposée axialement dans une première extrémité du tube, la paroi intérieure de l'extrémité aval de ladite buse divergeant vers l'aval à partir d'un canal court de section constante, la longueur du canal court étant du même ordre de grandeur que la racine carrée de sa section,
- une buse d'injection de produit à traiter disposée axialement dans la seconde extrémité du tube, l'extrémité aval de ladite buse convergeant vers l'aval et s'avançant dans l'extrémité aval divergente de la buse d'injection de vapeur,
- la paroi interne du tube droit comportant, au niveau de l'extrémité aval de la buse d'injection de produit, un rétrécissement de forme conique qui converge vers l'aval de ladite buse,
- une chambre de mélange située à l'embranchement du bras tubulaire et du tube droit et entre de la buse d'injection de vapeur et du rétrécissement,
- au moins un orifice disposé transversalement sur une partie de l'extrémité aval de la buse d'injection de produit, ledit orifice débouchant à l'intérieur dudit tube droit,
- les buses d'injection de vapeur et de produit étant disposées de manière mobile en translation axiale à l'intérieur dudit tube droit.

La présente invention a également pour objet un procédé de traitement d'un produit fluide, susceptible d'être réalisé dans le dispositif, dans lequel la vapeur à une vitesse sonique, la vitesse atteinte quand la valeur de la pression en amont de la buse est au moins le double de la valeur de la pression en aval, et le produit à traiter sont amenés à contre-courant l'un de l'autre, chacun par une extrémité du tube droit, la vapeur et le produit se mélangent dans la chambre de mélange, puis le produit traité est évacué par le bras tubulaire, ledit bras tubulaire et ledit tube droit formant un corps tubulaire en forme de T.

Ce dispositif et ce procédé peuvent être utilisés pour stériliser et/ou homogénéiser un produit fluide par injection de vapeur.

Par produit fluide, on entend une solution ou une suspension, par exemple aqueuse, présentant une viscosité de l'ordre de 1 à 100 000 mPa.s.

Avec le dispositif selon l'invention, il est possible de n'injecter que la quantité de vapeur nécessaire pour porter le produit fluide à la température voulue par condensation sur le produit de la totalité de la vapeur injectée.

La masse fluide chauffée présente alors une grande homogénéité à la sortie du dispositif, sans que d'éventuelles variations de pression au cours de son trajet en conduite d'attente, en aval, ne se traduisent par des variations de température de la vapeur injectée.

Cela permet de garantir une utilisation optimale de la vapeur et des conditions de stérilisation et/ou d'homogénéisation de la masse fluide remarquablement stables.

En particulier, dans le cas des produits contenant du lait, on observe une bonne homogénéisation obtenue grâce au dispositif, due à un effet de cisaillement des globules gras.

L'invention permet également l'obtention d'un effet stable pour les produits visqueux, en particulier les produits tels que les bouillies à base de céréales.

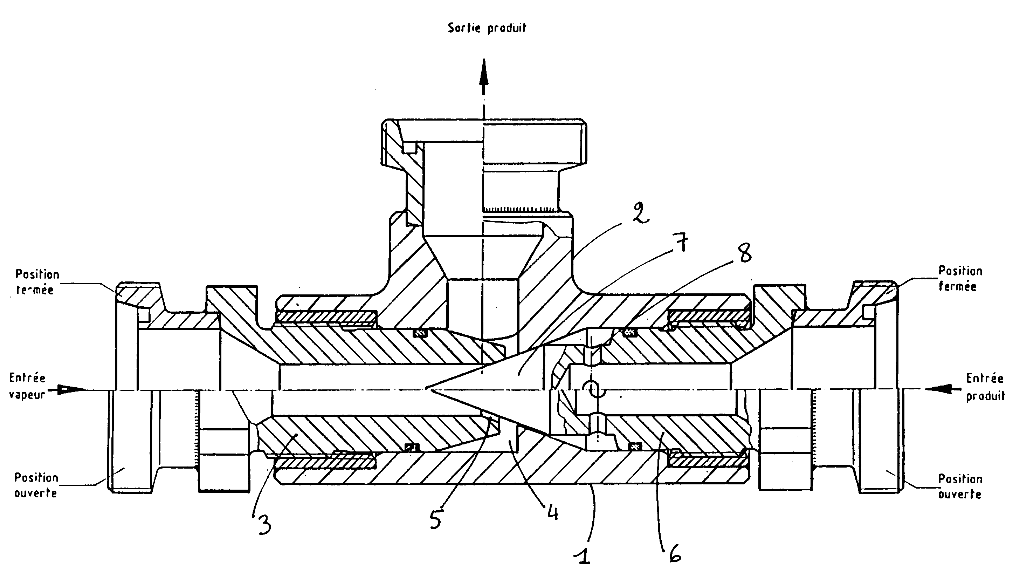

D'autres caractéristiques et avantages ressortiront de la description qui suit, faite en référence au dessin annexé donné uniquement à titre d'exemple, dans lequel la figure unique représente une vue schématique du dispositif selon l'invention.

Dans la suite de la présente description, on définit les extrémités des buses en fonction du sens d'écoulement du produit ou de la vapeur à l'intérieur.
Ainsi, on entend par extrémité amont d'une buse, la partie par laquelle arrive et/ou entre le produit ou la vapeur, c'est-à-dire l'extrémité la plus éloignée de la chambre de mélange.
On entend par extrémité aval, la partie la plus proche du centre du dispositif, c'est-à-dire de la chambre de mélange.

Le dispositif représenté à la figure unique comprend un corps tubulaire en forme de T, composé d'un tube droit (1) et d'un bras tubulaire de sortie du produit traité (2).

Une buse d'injection de vapeur (3) est disposée axialement dans une première extrémité du tube droit. Elle débouche sur une chambre de mélange (4) située à l'embranchement du bras tubulaire et du tube droit.
La paroi intérieure de l'extrémité aval de cette buse diverge vers l'aval, à partir d'un canal court (5) de section constante.
Par canal court, on peut entendre un canal dont la longueur est du même ordre de grandeur que la racine carrée de sa section. La longueur de ce canal peut être ajustée, entre autre, en fonction de la taille de la chambre de mélange et du débit de vapeur.
La paroi intérieure de l'extrémité aval de la buse d'injection de vapeur présente donc une surface de forme conique qui s'évase vers l'aval, à partir de l'orifice de sortie d'un canal court de section constante.

Une buse d'injection du produit à traiter (6) est disposée axialement dans la seconde extrémité du tube droit.

L'extrémité aval de cette buse converge vers l'aval, c'est-à-dire présente une surface (7) de forme conique qui s'évase vers l'amont de ladite buse.

La paroi interne du tube droit comporte, au niveau de l'extrémité aval de la buse d'injection de produit, un rétrécissement de forme conique qui converge vers ladite extrémité aval de ladite buse, c'est-à-dire qui s'évase vers l'amont de ladite buse.
L'extrémité aval de la buse d'injection de produit s'avance à l'intérieur de l'extrémité aval divergente de la buse d'injection de vapeur, ainsi que dans le rétrécissement de forme conique de la paroi interne du tube droit.
Cette extrémité aval de la buse d'injection de vapeur s'avance vers l'extrémité aval de la buse d'injection de produit, de sorte que ces deux extrémités délimitent entre elles un passage de forme tronconique, divergeant vers la chambre de mélange(4).

Au moins un orifice (8) est disposé transversalement sur une partie de l'extrémité aval de la buse d'injection de produit, et débouche à l'intérieur du tube droit.
L'orifice peut déboucher dans la zone comportant le rétrécissement de forme conique, ou juste dans la zone située en amont.

Les buses d'injection de vapeur et de produit sont disposées, à l'intérieur du tube droit, de manière mobile en translation selon l'axe longitudinal de symétrie dudit tube droit.
Cette translation axiale peut s'effectuer par rotation autour dudit axe de symétrie.
Le mouvement de translation peut être assuré, par exemple, par l'intermédiaire de moyens de filetage réalisés sur la paroi interne dudit tube droit et sur les parois externes desdites buses d'injection.
Cette translation permet donc de définir deux positions extrêmes pour ledit dispositif, à savoir une position dite fermée dans laquelle il ne pénètre rien dans la chambre de mélange, et une position dite ouverte. On peut en fait définir une suite de positions dites ouvertes, dans lesquelles il peut pénétrer dans ledit dispositif des quantités variables de produit à traiter et de vapeur, ces quantités étant fonction desdites positions.

En position fermée, la buse d'injection de produit est disposée de façon que la surface de forme conique de son extrémité aval est en contact, de la manière la plus hermétique possible, avec le rétrécissement de forme conique de la paroi interne du tube droit.
Dans cette position, la buse d'injection de vapeur est disposée de façon que la surface de forme conique de son extrémité aval est en contact, de la manière la plus hermétique possible, avec la surface de forme conique de l'extrémité aval de la buse d'injection de produit.

En position ouverte, les différents écarts possibles entre la surface de forme conique de l'extrémité aval de la buse d'injection de produit et le rétrécissement de forme conique de la paroi interne du tube droit définissent la quantité de produit susceptible de s'écouler dans la chambre de mélange.
De même, en position ouverte, les différents écarts possibles entre les surfaces de forme conique de l'extrémité aval de la buse d'injection de vapeur et de l'extrémité aval de la buse d'injection de produit définissent la quantité de vapeur susceptible de s'écouler dans la chambre de mélange.

Selon une forme préférée d'exécution du dispositif, les différents éléments qui le constituent sont réalisés en acier inoxydable.

De préférence, le corps en T présente à chaque extrémité du tube droit et à l'extrémité du bras tubulaire, des moyens de fixation à des conduites de diamètres respectifs correspondants, ces moyens pouvant être un filetage ou des éléments de fermeture du genre baïonnette.
La fixation des divers éléments dans le corps en forme de T est prévue de différentes manière, selon leur forme ou leur nature respective. Les buses d'injection peuvent être retenues par un épaulement prévu sur le pourtour de leur extrémité amont et reposant sur une gorge aménagée dans la paroi intérieure de l'extrémité du tube.

Afin d'utiliser le dispositif selon l'invention, on peut brancher une extrémité du tube sur une conduite d'amenée de vapeur sous pression, brancher l'autre extrémité sur une conduite d'amenée du produit fluide à traiter, et brancher le bras tubulaire sur une conduite d'attente.
La conduite d'attente peut elle-même être reliée par une vanne de contre-pression à une chambre de refroidissement ou de détente.

La présente invention concerne également un procédé de traitement d'un produit fluide, par injection de vapeur, ledit procédé étant susceptible d'être mis en oeuvre dans le dispositif décrit ci-dessus.

Ainsi, selon ce procédé, on amène le produit à traiter d'une part, la vapeur à une vitesse sonique d'autre part, à contre-courant l'un de l'autre, par exemple chacun par une extrémité opposée d'un tube droit, puis l'on mélange la vapeur et le produit à l'intérieur d'une chambre de mélange et enfin, l'on évacue le produit traité par un bras tubulaire, ledit bras tubulaire et ledit tube droit formant un corps tubulaire en forme de T.

Les exemples qui suivent illustrent quelques modes d'utilisation du dispositif selon l'invention.

### Exemple 1

On prépare un mélange constitué d'1 kg de farine de blé, de 11 kg de lait frais partiellement écrémé, de 500 g de saccharose, de 500 g d'huile de tournesol et de 500 g de cacao dégraissé.
On introduit ce mélange, présentant une viscosité de l'ordre de 1 mPa.s, et une température de 20°C environ, dans le dispositif selon l'invention, par une extrémité du tube droit, en réglant la pression d'entrée entre 4 et 10 bars à l'aide de la vis de serrage filetée d'entrée du produit, prévue à cet effet.
Par l'extrémité opposée du tube droit, l'on introduit de la vapeur à 6 bars de pression, ladite vapeur ayant une vitesse sonique.
On ajuste la température à 130°C à l'aide de la vis de serrage filetée prévue à cet effet, côté entrée de vapeur.
La rencontre du produit à traiter et de la vapeur, arrivant en sens inverse, garantit une parfaite homogénéisation du mélange et une stabilisation instantanée de la température. On laisse le mélange pendant un temps déterminé à une pression de 2,5 bars, de manière à obtenir un produit final parfaitement stérilisé et stable.

### Exemple 2

On introduit un lait pasteurisé et concentré 2,4 fois, présentant une viscosité de 500 mPa.s, et une température de 10°C, par l'extrémité d'entrée du produit du dispositif selon l'invention, tout en maintenant une pression d'entrée entre 7 et 12 bars.
Par l'extrémité opposée d'entrée de la vapeur, on introduit ladite vapeur à une pression de 12 bars, à une vitesse sonique.
On ajuste la température à 150°C par serrage de la vis filetée côté entrée vapeur.
Après 2 secondes d'attente à 150°C, à une pression de 5 bars, le produit est refroidi par expansion sous pression réduite, à 70°C. Plus la différence de température est élevée entre le produit froid et le produit stérilisé, meilleure est l'effet d'homogénéisation.
On obtient ainsi un lait concentré stérilisé.

### Exemple 3

On prépare, à 20°C, un mélange contenant 1 kg de farine de seigle, 1 kg de farine d'orge, 1 kg de farine de maïs, 1 kg de farine de riz, 1 kg de farine d'avoine, 7 kg de farine de blé complet, 5 kg de farine de blé préalablement maltée, 3 kg de sucre et 30 kg d'eau.
Ce mélange est introduit, par l'entrée produit, dans le dispositif selon l'invention, de manière semblable à celle de l'exemple 1.
La vapeur est introduite, à une vitesse sonique, par l'extrémité opposée, à une pression de 10 bars.
La température est ajustée à 135°C à l'aide de la vis de serrage, côté vapeur.
Le mélange ainsi gélatinisé présente une viscosité de environ 80 000 mPa.s.
On maintient ce mélange à 135°C pendant environ 15 secondes puis on le refroidit par expansion atmosphérique à 95°C et on le sèche sur rouleaux, avant de le moudre.
On obtient ainsi un produit à base de céréales précuites, stérilisé et parfaitement homogène, susceptible d'être reconstitué pour la consommation de manière instantanée.

## Revendications

1. Dispositif de traitement d'un produit fluide, par injection de vapeur, comprenant :
- un corps tubulaire en forme de T composé d'un tube droit (1) et d'un bras tubulaire (2) de sortie du produit traité,
- une buse d'injection de vapeur (3) disposée axialement dans une première extrémité du tube, la paroi intérieure de l'extrémité aval de ladite buse (3) divergeant vers l'aval à partir d'un canal court (5) de section constante, la longueur du canal court (5) étant du même ordre de grandeur que la racine carrée de sa section,
- une buse d'injection de produit à traiter (6) disposée axialement dans la seconde extrémité du tube (1), l'extrémité aval de ladite buse (6) convergeant vers l'aval et s'avançant dans l'extrémité aval divergente de la buse d'injection de vapeur (3),
- la paroi interne du tube droit comportant, au niveau de l'extrémité aval de la buse d'injection de produit, un rétrécissement de forme conique (7) qui converge vers l'aval de ladite buse (6),
- une chambre de mélange (4) située à l'embranchement du bras tubulaire (2) et du tube droit (1) et entre de la buse d'injection de vapeur (3) et du rétrécissement (7),
- au moins un orifice (8) disposé transversalement sur une partie de l'extrémité aval de la buse d'injection de produit (6), ledit orifice (8) débouchant à l'intérieur dudit tube droit (1),
- les buses d'injection de vapeur (3) et de produit (6) étant disposées de manière mobile en translation axiale à l'intérieur dudit tube droit (1).

2. Procédé de traitement d'un produit fluide, susceptible d'être réalisé dans un dispositif selon la revendication 1, dans lequel la vapeur à une vitesse sonique, la vitesse atteinte quand la valeur de la pression en amont de la buse est au moins le double de la valeur de la pression en aval, et le produit à traiter sont amenés à contre-courant l'un de l'autre, chacun par une extrémité du tube droit (1), la vapeur et le produit se mélangent dans la chambre de mélange (4), puis le produit traité est évacué par le bras tubulaire (2), ledit bras tubulaire et ledit tube droit formant un corps tubulaire en forme de T.

## Claims

1. Apparatus for treating a fluid product, by injection of steam, comprising:
a T-shaped tubular body composed of a straight tube (1) and a tubular arm (2) as an exit for the treated product,
a steam injection nozzle (3) positioned axially in a first end of the tube, the inner wall of the downstream end of the nozzle diverging downstream from a short bore (5) of constant cross-section, the length of the short bore (5) having the same order of magnitude as the square root of its cross-section,
an injection nozzle for the product to be treated (6) positioned axially in the second end of the tube (1), the downstream end of the nozzle (6) converging downstream and advancing into the divergent downstream end of the steam injection nozzle (3),
- the inner wall of the straight tube comprising, at the downstream end of the product injection nozzle, a conically shaped constriction (7) which converges towards the downstream end of the nozzle (6),
- a mixing chamber (4) situated at the join of the tubular arm (2) and the straight tube (1) and between the steam injection nozzle (3) and the constriction (7),
- at least one orifice (8) formed transversely in a part of the downstream end of the product injection nozzle (6), the orifice (8) opening into the interior of the straight tube (1),
- the steam (3) and product (6) injection nozzles being mounted for axial displacement inside the straight tube (1).

2. Process for treating a fluid product which may be carried out in the apparatus claimed in claim 1, in which the steam, which is a sonic velocity, the velocity reached when the value of the pressure upstream of the nozzle is at least twice the value of the pressure downstream, and the product to be treated are each guided counter-current to the other, each from an end of the straight tube (1), the steam and the product are mixed in the mixing chamber (4), and the treated product is removed through the tubular arm (2), the tubular arm and the straight tube forming a T-shaped tubular body.

## Patentansprüche

1. Vorrichtung zur Behandlung eines fließfähigen Produkts durch Dampfeinspritzung, die folgendes umfaßt:
- einen T-förmigen Rohrkörper, der aus einem geraden Rohr (1) und einem Zweigrohr (2) für den Austritt des behandelten Produkte besteht,
- eine Dampfeinspritzdüse (3), die axial in einem ersten Ende des Rohrs angeordnet ist, wobei die Innenwand des ausgangsseitigen Endes der Düse (3) von einem kurzen Kanal (5) mit konstantem Querschnitt aus auf die Ausgangsseite zu divergiert, wobei die Länge des kurzen Kanals (5) von der Größenordnung der Quadratwurzel seines Querschnitte ist,
- eine Düse (6) zur Einspritzung des zu behandelnden Produkts, die axial im zweiten Ende des Rohrs (1) angeordnet ist und deren ausgangsseitiges Ende auf die Ausgangsseite zu konvergiert und in das divergierende ausgangsseitige Ende der Dampfeinspritzdüse (3) eintritt,
- wobei die Innenwand des geraden Rohrs auf Höhe des ausgangsseitigen Endes der Produkteinspritzdüse eine Verengung (7) konischer Form aufweist, die auf die Ausgangsseite der Düse (6) zu konvergiert,
- eine Mischkammer (4), die an der Anschlußstelle des Zweigrohrs (2) und des geraden Rohrs (1) und zwischen der Dampfeinspritzdüse (3) und der Verengung (7) angeordnet ist,
- mindestens eine Öffnung (8), die in Querrichtung auf einem Teil des ausgangsseitigen Endes der Produkteinspritzdüse (6) angeordnet ist und in das Innere des geraden Rohrs mündet,
- wobei die Dampfeinspritzdüse (3) und die Produkteinspritzdüse (6) im Inneren des geraden Rohrs (1) axial geradlinig beweglich angeordnet sind.

2. In einer Vorrichtung nach Anspruch 1 durchführbares Verfahren zur Behandlung eines fließfähigen Produkts, bei dem der Dampf mit einer Schallgeschwindigkeit, die errreicht ist, wenn der Wert des Drucks auf der Eingangsseite der Düse mindestens das Zweifache des Werts des Drucks auf der Ausgangsseite beträgt, und das zu behandelnde Produkt im Gegenstrom zueinander jeweils über ein Ende des geraden Rohrs (1) zugeführt werden, wobei der Dampf und das Produkt sich in der Mischkammer (4) mischen, und dann das behandelte Produkt über das Zweigrohr (2) abgeführt wird, wobei das Zweigrohr und das gerade Rohr einen T-förmigen Rohrkörper bilden.
